# EUROPEAN PATENT APPLICATION

(11) **EP 1 306 977 A2**
(43) Date of publication of application: **02.05.2003**
(21) Application number: 02023477.9
(22) Date of filing: 21.10.2002
(51) Int. Cl.: H04B 1/10, H04B 1/16

(54) **Receiver circuit for use in radio communications and communications unit including such a circuit**

(30) Priority: 24.10.2001 GB 0125463
(71) Applicant: MOTOROLA, INC., Schaumburg, IL 60196 (US)
(72) Inventor: Shirazi, Gadi, Ramat-Gan 52416 (IL); Friedlander, Haim, Rehovot 76285 (IL)
(74) Representative: McCormack, Derek James

(57) **Abstract**

A receiver circuit (106) for a radio communications unit, the receiver circuit comprising an amplifier (220) operable to provide the receiver with a dynamic performance which is variable according to the value of an input control signal applied to the amplifier and a downconverter (240) for downconverting a received radio frequency signal to one of intermediate or baseband frequency, signal measurement means (270) for measuring a wideband signal strength of a received radio frequency signal and having an output which is coupled to the amplifier and operable to provide a control signal giving dynamic control of the the amplifier and characterised in that the amplifier is in a circuit path of the receiver operational at radio frequency prior to downconverting by the downconverter.

The receiver circuit provides the advantage that the necessary dynamic range is determined in an adaptive, real-time manner so as to save battery current drain.

## Description

### Field of the Invention

This invention relates to a receiver circuit for use in radio communications and a communications unit incorporating such a circuit. The communications unit may comprise a mobile or portable radio transceiver and/or a radio telephone. The invention is applicable to, but not limited to, selecting the dynamic range of a receiver for use in such a communications unit.

### Background of the Invention

Radio communications systems, for example cellular telephony or private mobile communications systems, typically provide for radio telecommunication links to be arranged between a plurality of subscriber units, often termed mobile stations ('MS's). The term mobile station is used in the art generally to embrace both hand-portable and vehicular mounted radio communication units. Communication between MSs may be made either directly or via intermediate stations known in the art as base transceiver stations (BTSs). Communications between MSs are referred to as mobile communications.

In a cellular mobile communications system, each BTS has associated with it a particular geographical coverage area (or cell). The coverage area defines a particular range within which the BTS can maintain acceptable communications with MSs operating in its serving cell. Often these cells combine to produce an expanded system coverage area, with the infrastructure supporting respective cells interconnected via centralised switching equipment. The coverage area is typically determined by the ability of a receiver to receive and decode very low-level signals from the transmitting unit. The range of signal levels that a receiver must be able to receive is termed the 'dynamic range' of a radio receiver. The dynamic range is also an important factor in direct communications between MSs.

For present day MSs, a greater dynamic range performance is desirable because it leads to better connectivity, less dropped calls and less cell-to-cell handovers in cellular systems. This further provides a reduction in system overhead transmissions as well as a general improvement to the quality of service of the system. Therefore, it is generally a desirable aim of a receiver designer to increase the dynamic range of a receiver.

However, a trade-off exists between dynamic range and power consumption in radio receivers. Such a trade-off is particularly important in the design of MSs, where battery life and therefore power consumption can be of critical importance. Usually, in order to obtain a higher dynamic range, the active stages of the radio frequency (RF) components of a receiver must run at higher DC currents. Running at higher DC currents consequently causes a reduction in battery life.

One option to compensate for a reduction in battery life, in order to increase dynamic range, would be to increase the battery capacity. Another option is to reduce standby time. However, such options are rarely considered as practical in the mobile communications field. Reducing standby time or increasing battery capacity are both highly undesirable for mobile stations, where low size and weight and long standby times are demanded in order for a product to be competitive in this market.

A radio receiver, e.g. for use in a mobile station, is often defined in terms of 'front-end' and 'back-end' receiver portions. The front-end portion of a receiver comprises the RF circuitry whereas the 'back-end' comprises the later stages particularly the base-band processing circuitry. In the field of this invention it is known that many receivers include an automatic gain control (AGC) circuit to control the gain of the signal processed in the back-end parts of the receiver. Such AGC operation is narrow-band, and responds only to signals that are on-channel. Thus, conventional AGC circuits cannot detect strong off-channel signals which would overdrive the front-end part of the receiver. In any case, it would be undesirable for the receiver to reduce the gain at the back-end as a result of detection of a strong interfereing off-channel signal, since this would drive the weak wanted on-channel signal into noise.

Front-end components, such as low noise amplifiers (LNAs) and mixers, with programmable DC current consumption, are known and commercially available. These components allow a control current to be set to a selected level thereby giving adjustment of the dynamic range. However one of several discrete pre-defined states has to be selected. Thus, for high dynamic range the current and power consumption is still undesirably high.

### Summary of the invention

According to the present invention there is provided a receiver circuit for a radio communications unit, the receiver circuit comprising an amplifier operable to provide the receiver with a dynamic range performance which is variable according to the value of an input control signal applied to the amplifier and a downconverter for downconverting a received radio frequency signal to one of intermediate or baseband frequency, signal measurement means for measuring a wideband signal strength of a received radio frequency signal and having an output which is coupled to the amplifier and operable to provide a control signal giving dynamic control of the the amplifier and characterised in that the amplifier is in a circuit path of the receiver operational at radio frequency prior to downconverting by the downconverter.

The amplifier may be a radio frequency low noise amplifier (LNA) having a current consumption controllable by the control signal.

The receiver circuit according to the first aspect of the invention may include a signal processor operably coupled to the signal measurement means and to the amplifier for determining, based on the measured wideband signal strength, the value of the control signal to be applied to the amplifier.

The signal measurement means may be operable to produce an analog output. The signal processor may be a digital signal processor. The output of the signal measurement means may be applied to an analog-to-digital converter whose output is applied to the signal processor.

In the receiver circuit according to the first aspect of the invention the amplifier may have in operation a controllable current level, whereby a control signal provided by the signal processor controls current consumption of the amplifier to set a dynamic range performance of the receiver circuit. The signal processor may apply an algorithm to make decisions on the value of the control signal based upon the measured signal strength.

In the receiver circuit according to the first aspect of the invention the radio frequency amplifier may comprise a low-noise pre-amplifier having an adjustable DC current setting which sets the dynamic range of the low-noise pre-amplifier.

In the receiver circuit according to the first aspect of the invention the signal processor may be operable, in response to the signal measurement means measuring a received signal having a strength above a signal threshold level, to provide a control signal to the amplifier which sets the amplifier to provide the receiver with a first dynamic range mode and the signal processor may be operable, in response to the signal measurement means measuring a received signal having a strength below the threshold level, to provide a control signal to the amplifier which sets the amplifier to provide the receiver with a second dynamic range mode in which the dynamic range is lower than in the first mode.

In the said second mode the signal processor may set a current level of the radio frequency amplifier to a low-current mode, thereby saving current consumption of said wireless communication unit.

In the receiver circuit according to the first aspect of the invention the signal measurement means may be operable in a manner such that the signal threshold level is either pre-determined or dynamically adjustable. The signal level threshold may be controlled by a signal processor or a controller which may be the same signal processor that produces the control signal delivered to the amplifier.

The signal processor of the receiver circuit may be operable to select from a range of control signal values to control the dynamic range provided by the radio frequency amplifier dependent upon the received signal measurement made by the measurement means.

The receiver circuit according to the first aspect of the invention may further include a memory device for storing receiver dynamic range performance information. The memory device may be operable to store receiver dynamic range performance information based on off-channel and optionally on-channel signal measurements.

In the receiver circuit according to the first aspect of the invention the signal measurement means may conveniently comprise a radio frequency diode.

According to the present invention in a second aspect there is provided a radio communications unit comprising a mobile station which includes a receiver circuit according to the first aspect.

The communications unit according to the second aspect of the invention may comprise a radio frequency detection portion and, operably coupled thereto, a baseband frequency detection portion, the receiver circuit being included in the radio frequency detection portion. The receiver circuit may be employed to process a received RF signal prior to delivery of the signal to an AGC amplifier and subsequently the baseband frequency portion.

The communications unit according to the second aspect of the invention may further include an indicator, operably coupled to the receiver circuit, for providing to a user of the wireless communications unit information about the dynamic range of the receiver of the unit. The indicator may be operably coupled to the signal processor and may conveniently be operable to provide an indication of whether a dynamic range adjustment algorithm applicable by the signal processor is in use. The indicator may comprise an electro-optical display which may be one of the well known kinds of display used in communications unites.

The communications unit according to the second aspect of the invention may be a mobile station which comprises a radiotelephone.

The present invention beneficially provides a novel circuit for use in the front-end part of a receiver, for controlling the dynamic range of the receiver in an adaptive manner. In particular, the dynamic range is increased only in the presence of a strong off-channel interfering signal. Thus, when there is no need for the dynamic range to be increased, the amplifier current is not increased, and the drain on the battery is thereby beneficially minimised.

Arrangements for dynamically adjusting range in a receiver are known. In particular, US-A-5283536 describes a particular implementation of AGC (automatic gain control) for the purpose of increasing the linear dynamic range of a receiver. However, the gain control mechanism described in this patent controls the IF (intermediate frequency) gain. It does not address the problem of current drain of the RF LNA (low-noise amplifier), which is very important in use of mobile devices. The invention beneficially allows the current drain of the RF LNA to be minimized when no strong signals are present in order to save current, and increases the current only when strong signals are detected in order to increase the dynamic range of this stage. This is independent of AGC mechanisms applied to the IF and baseband sections of the receiver (such as described in US Patent 5283536), which are required in any case to achieve to overall required dynamic range.

Embodiments of the present invention will now be described by way of example with reference to the accompanying drawings, in which:

### Brief Description of the accompanying drawings

Figure 1 is a block diagram of a radio communications unit embodying the invention;
Figure 2 is a more detailed block-diagram representation of an arrangement and method of use thereof, incorporating a circuit embodying the present invention, for use in the uint shown in Figure 1, to give adaptive control of receiver dynamic range; and
Figure 3 is a graph for an LNA used in the unit of Figure 1 of current versus received signal strength giving a representation of how a decision to increase dynamic range of the LNA is determined based on the received signal strength.

### Description of embodiments of the invention

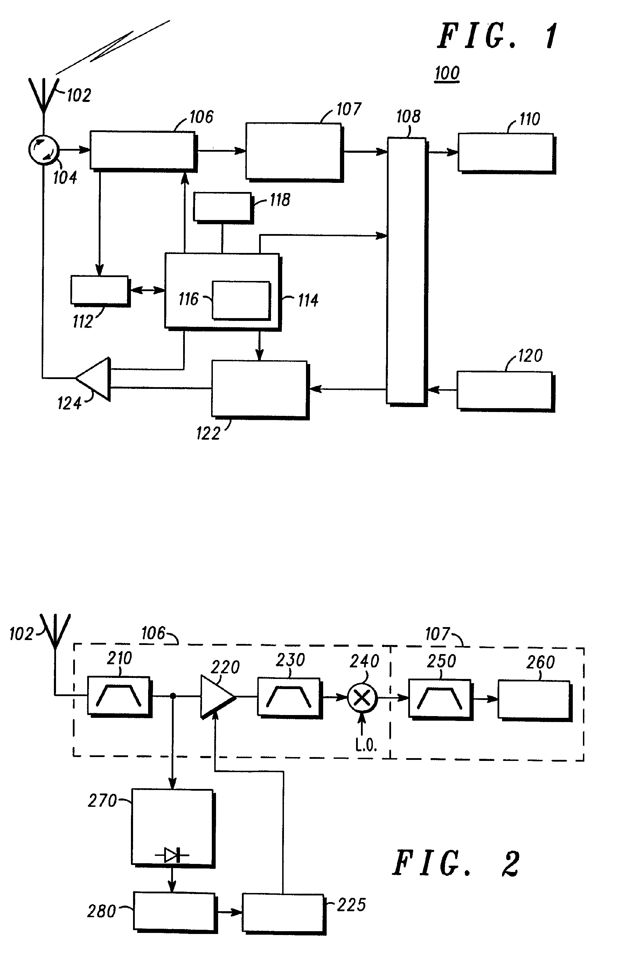

Referring now to Figure 1, a block diagram is shown of a a subscriber unit/mobile station (MS) 100 embodying the invention. The MS 100 includes an antenna 102 coupled to a duplex filter or circulator 104 that provides isolation between receive and transmit chains within the MS. The receiver chain includes scanning receiver front-end circuitry 106 (effectively providing reception, filtering and intermediate or base-band frequency conversion). The scanning front-end circuitry 106 is serially coupled to a signal processor 108 ( in practice realised by a digital signal processor,DSP) via a baseband (back-end) processing circuit 107. A specific form of the receiver chain is described in more detail later with reference to Figure 2.

The receiver chain 110, in particular the signal processing function 108, coupled to the scanning front-end circuitry 106, has been adapted for a receiving MS to receive and process an 'on-channel' signal in the presence of a strong interfering signal by adapting the dynamic range according to the conditions prevalent at that time. In this manner, the MS 100 can initiate a controlled adjustment of the dynamic range when signal conditions merit such adjustment.

A controller 114 shown in Figure 1 is operably coupled to the scanning front-end circuitry 106 so that the receiver can calculate receive bit-error-rate (BER) or frame error rate (FER) or similar link-quality measurement data from recovered information via a RSSI (received signal strength indicator) 112. The RSSI 112 is operably coupled to the scanning front-end circuitry 106. A memory device 116 within the controller 114 stores a wide array of MS-specific data, for example decoding/encoding functions, dynamic range performance information based on 'on-channel' and 'off-channel' signal measurements obtained from, say, the RSSI 112. A timer 118 is operably coupled to the controller 114 to control the timing of operations, namely the transmission or reception of time-dependent signals, within the MS 100. As known in the art, received signals that are processed by the signal processor 108 are typically delivered to an output device 110, such as a speaker and/or visual display unit (VDU).

In an particular embodiment of the present invention, an indication as to whether a dynamic range adjustment algorithm, e.g. as described later, is in use may be obtainable in a real-time manner, by a field engineer for the purpose of system testing, field testing and/or servicing. It would be preferred to allow access to this information via test modes only, say via an information access port using an RS232 interface. Alternatively, such information may be displayed to the user. In this manner, the user is made aware that in his/her present location, stand-by time may or may not be adversely affected.

As regards the transmit chain of the MS 100 shown in Figure 1, this essentially includes an input device 120, such as a microphone, coupled in series through the signal processor 108, transmitter/modulation circuitry 122 and a power amplifier 124. The signal processor 108, transmitter/modulation circuitry 122 and the power amplifier 124 are operationally responsive to the controller 114, with an output from the power amplifier coupled to the duplex filter or circulator 104, in a manner known in the art.

The signal processor 108 in the transmit chain could be implemented distinctly from the processor 108 in the receive chain. However, in practice, a single processor 108 is used for both functions, i.e. to process both transmit and receive signals, as shown in Figure 1.

Of course, the various components of the MS 100 can be realised in discrete or integrated component form, with an ultimate structure therefore being merely an arbitrary selection.

Referring now to Figure 2, a more detailed form is shown of a receiver arrangement and method of operation of such an arrangement for use in the MS 100. The arrangement shown in Figure 2 incorporates adaptive control of receiver dynamic range in accordance with an embodiment of the present invention. Signals enter the receiver chain via the antenna 102 and arrive at the input of a first RF filter 210. The RF filter 210 is not capable of being a narrowband (on-channel) device at such RF frequencies, but serves to reject out-of-band signals. The filtered signal exits the first filter 210 and is input to a LNA (low noise pre-amplifier) 220. The signal is amplified by the LNA 220 and after amplification is applied to a second RF filter 230. The second RF filter 230 further filters out-of-band interfering signals, for example image signals generated during amplification by the LNA 220. The RF filtered signal is then applied to a mixer 240, which uses a signal L.O. from a local oscillator to down-convert the frequency of the received signal to an lower frequency, which as shown in Figure 2 is an intermediate frequency (IF) (although direct conversion to a baseband frequency could also be made). The intermediate frequency signal is further filtered by an IF filter 250 and applied as an input to a signal processor 260. The signal processor 260 has internal circuits (not shown) including an AGC circuit and a downconverter which generates a baseband signal and circuits for demodulation and further processing of the signal in a known manner. In practice, the functions of the processors 108 and 260 may be carried out in a single device.

The LNA 220 has an adjustable DC current setting, which determines the dynamic range of the LNA 220. The DC current is adjusted dynamically in the following manner. A portion of the signal output from the first RF filter 210 and applied to the LNA 220 is sampled and applied as an input to a RF signal strength detector 270. Various known arrangements can be used to sample a portion of the RF signal applied to the LNA 220, such as a signal coupler or splitter formed using stripline or microstrip technology. The detector 270 may be a known detector incorporating a RF diode. The detector 270 measures the power level of the sampled signal and produces as an analog output a voltage which is roughly proportional to the measured power level. The output voltage is fed into an A/D (analogue-to-digital) converter 280 that is operably coupled to a processor 225. (In practice, the the processor 225 may be part of the same processing device providing the function of the signal processor 108 shown in Figure 1.) The output of the A/D converter 280 is fed to the signal processor 225. Based on the signal received from the A/D converter 280, the processor 225 evaluates the RF input signal level. The processor 225 thereby determines the necessary setting of the DC current level of the LNA 220 accordingly.

In operation, the processor 225 receives as an input from the detector 270 a wide-band indication of signal strength at the input of the LNA 220. Based on this input, the signal processor 225 applies a decision algorithm to decide whether or not to increase the dynamic range of the LNA 220, as mentioned above. Advantageously, the arrangement and method determines the necessary dynamic range in an adaptive, real-time manner so as to save battery current.

If a strong signal appears at the input of the LNA 220, the processor 225 will set the DC current of the LNA 220 to a high-current level, thus increasing the dynamic range of the front-end. This will prevent the interfering signal from pushing the LNA 220 into the nonlinear region, thus avoiding gain loss and distortion of the wanted signal.

It is noteworthy that, if more than one interfering signal is present, increasing the DC current of the LNA 200 also increases the third-order intercept, thereby reducing the level of intermodulation products which could fall into the channel.

Conversely, the detector 270 may measure a weak received (wideband) signal, indicating a low 'on-channel' signal level and a similarly low level of interfering signal within the passband of the first RF filter 210. In this case, the signal processor 225 will set the DC current of the LNA 220 to a low-current level, thereby saving current consumption, and extending stand-by time, of the MS 100.

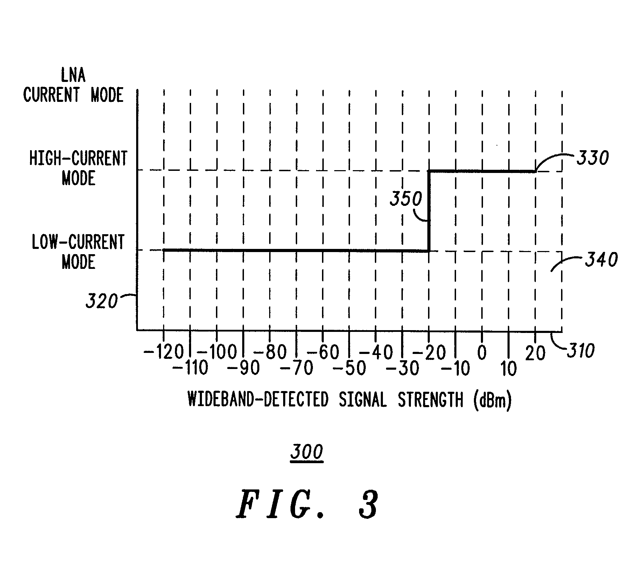

Referring now to Figure 3, a graph 300 is shown that demonstrates an example of a decision algorithm which may be applied by the processor 225. This illustrates how the decision to increase the dynamic range of the LNA 220 may be determined, based on wideband detected signal strength. The graph 300 shows a plot of the current level 320 supplied to the LNA 220 against detected signal strength 310, as detected by the RF detector 270. Two current levels are selected. A first level is a high-current mode level 330 and a second level is a low-current mode level 340. However, it is within the contemplation of the invention that any number of current levels can be used to benefit from the inventive concepts described herein.

Using the two current levels shown in Figure 3,operation is as follows. The detector 270 measures the signal strength of any wideband signal passing through the RF pre-filter 210. Clearly, any desired signal would be included in this frequency band. Whilst the detected RF signal strength level is less than a particular level 350, for example by having a -dBm magnitude greater than -20dBm as shown, the processor 225 determines that the LNA 220 should remain in the low-current mode 340 of operation. However, when the received strength level is determined to be greater than the particular level 350, the processor 225 issues a control signal to the LNA 220 which switches the LNA into a high-current mode 330 of operation.

In this manner, the dynamic range of the receiver can be extended by adjustment of the LNA 220, at the times required, dependent upon the prevailing signal conditions. In particular, the dynamic range is increased only in the presence of a strong interfering signal. Thus, when there is no need for the dynamic range to be increased, the current level applied to the LNA 220 is set to the low-current mode, and the standby time is not adversely affected.

It is also within the contemplation of the invention that a controller (which may be the processor 225 and/or the processor 108 and/or the controller 114) may control the position on the signal strength scale of the particular level 350.

It is within the contemplation of the invention that the particular level used to control the operation of the LNA 220 may be pre-determined or dynamically adjusted. More generally, a dynamic adaptation of the particular level 350, according to an embodiment of the present invention, may be implemented in a respective communication unit in any suitable manner. For example, a memory chip may be added to a conventional communication unit, or alternatively existing parts of a conventional communication unit may be adapted, for example by reprogramming one or more processors therein. As such the required adaptation may be implemented in the form of processor-implementable instructions stored on a storage medium, such as a floppy disk, hard disk, PROM, RAM or any combination of these or other storage multimedia.

## Claims

1. A receiver circuit (106) for a radio communications unit, the receiver circuit comprising an amplifier (220) operable to provide the receiver with a dynamic range performance which is variable according to the value of an input control signal applied to the amplifier and a downconverter (240) for downconverting a received radio frequency signal to one of intermediate or baseband frequency, signal measurement means (270) for measuring a wideband signal strength of a received radio frequency signal and having an output which is coupled to the amplifier and operable to provide a control signal giving dynamic control of the the amplifier and **characterised in that** the amplifier is in a circuit path of the receiver operational at radio frequency prior to downconverting by the downconverter.

2. A receiver circuit according to claim 1 and wherein the amplifier is a radio frequency low noise amplifier having a current consumption controllable by the control signal.

3. A receiver circuit according to claim 1 or claim 2 and which includes a signal processor operably coupled to the signal measurement means and to the amplifier for determining, based on the measured wideband signal strength, the value of the control signal to be applied to the amplifier.

4. A receiver circuit according to claim 1, claim 2 or claim 3 and wherein the signal measurement means is operable to produce an analog output, the signal processor is a digital signal processor, and the receiver circuit includes a digital-to-analog converter operably connected to an output of the signal measurement means and an input of the signal processor.

5. A receiver circuit according to any one of claims 3 or 4, operable whereby the control signal provided by the signal processor controls current consumption of the amplifier to set a dynamic range performance of the receiver circuit.

6. A receiver circuit according to claim 5 and wherein the signal processor is operable to apply an algorithm to make decisions on the value of the control signal based upon the measured signal strength.

7. A receiver circuit according to any one of the preceding claims and including a band pass RF filter (210) operably coupled to the amplifier whereby a filtered output from the band pass filter is applied to the amplifier.

8. A receiver circuit according to claim 7 and including a further band pass RF filter (230) operably coupled to the amplifier whereby an output of the amplifier is applied to the band pass filter.

9. A receiver circuit according to any one of the preceding claims and wherein the signal processor is operable, in response to the said signal measurement means measuring a received signal having a strength above a signal threshold level, to provide a control signal to the amplifier which sets the amplifier to provide the receiver with a first dynamic range mode and the signal processor is operable, in response to the said signal measurement means measuring a received signal having a strength below the threshold level, to provide a control signal to the amplifier which sets the amplifier to provide the receiver with a second dynamic range mode in which the dynamic range is lower than in the first mode.

10. A receiver circuit according to claim 9 and wherein in the second mode the signal processor sets a current level of the radio frequency amplifier to a low-current mode, thereby saving current consumption of said wireless communication unit.

11. A receiver circuit according to claim 9 or claim 10 and wherein the signal measurement means is operable in a manner such that the signal threshold level is either pre-determined or dynamically adjustable.

12. A receiver circuit according to claim 9, claim 10 or claim 11 and wherein the signal level measurement means is operable in a manner such that the signal level threshold is controlled by a signal processor or a controller.

13. A receiver circuit according to any one of the preceding claims and wherein the signal processor is operable to select from a range of control signal values to control the dynamic range provided by the radio frequency amplifier dependent upon the received signal measurement made by the measurement means.

14. A receiver circuit according to any one of the preceding claims which further includes a memory device for storing receiver dynamic range performance information.

15. A receiver circuit according to claim 14 and wherein the memory device is operable to store receiver dynamic range performance information based on off-channel and optionally on-channel signal measurements.

16. A receiver circuit according to any one of the preceding claims and wherein the signal measurement means comprises a radio frequency diode.

17. A radio communications unit which includes a receiver circuit according to any one of the preceding claims.

18. A communications unit according to claim 17 and which comprises a radio frequency detection portion and, operably coupled thereto, a baseband frequency detection portion, and wherein the receiver circuit is included in the radio frequency detection portion.

19. A communications unit according to claim 16, claim 17 or claim 18 and further including an indicator, operably coupled to the receiver circuit, for providing to a user of the wireless communication unit information about the dynamic range of the receiver of the unit.

20. A communications unit according to claim 19 and wherein the indicator is operably coupled to the signal processor and is operable to provide an indication of whether a dynamic range adjustment algorithm applicable by the signal processor is in use.

21. A communications unit according to claim 19 or claim 20 and wherein the indicator comprises an electro-optical display.

22. A communications unit according to any one of claims 16 to 21 and wherein the unit is a mobile station comprising a radiotelephone.
